# EUROPÄISCHE PATENTSCHRIFT

(11) **EP 1 120 237 B1**
(45) Veröffentlichungstag und Bekanntmachung des Hinweises auf die Patenterteilung: **04.01.2006**
(21) Anmeldenummer: 01101517.9
(22) Anmeldetag: 24.01.2001
(51) Int. Cl.: B30B 9/30, G01G 19/393

(54) **Ballenpresse mit Wiegevorrichtung und Wiegeverfahren**
Baling press with weighing apparatus and weighing method
Presse à balles avec dispositif de pesage et procédé de pesage

(30) Priorität: 26.01.2000 DE 20001363 U; 23.08.2000 DE 20014583 U
(43) Veröffentlichungstag der Anmeldung: 01.08.2001
(73) Patentinhaber: Autefa Automation GmbH, 86316 Friedberg (DE)
(72) Erfinder: Hirschek, Herwig, 86399 Bobingen (DE)
(74) Vertreter: Ernicke, Klaus Stefan

(56) Entgegenhaltungen:
- EP-A- 0 224 205
- DE-A- 2 045 864
- DE-U- 29 602 267
- FR-A- 2 542 253
- GB-A- 2 033 590
- US-A- 3 220 500
- US-A- 4 162 603
- US-A- 5 890 426

## Beschreibung

Die Erfindung betrifft eine Ballenpresse für Fasergut mit mindestens einer Wiegevorrichtung sowie ein Wiegeverfahren mit den Merkmalen im Oberbegriff des Verfahrens- und Vorrichtungshauptanspruches.

Ein solches Wiegeverfahren nebst einer Heuballenpresse mit einer Wiegevorrichtung ist aus der US-A-5,001,974 bekannt. Hierbei wird das Heu zunächst auf einem Förderer in eine Messstation und dort auf eine Wiegeplatte mit Wiegezellen transportiert. Das zu verpressende Heu wird komplett und in einem Zug mit einem Förderdruck eingefüllt. Wenn das vorgesehene Ballengewicht erreicht ist, wird das Heu in eine Presskammer übergeschoben, wo es in einem Hub verdichtet wird. Anschließend schiebt ein Zylinder den Pressballen in eine Umreifungsstation. Das Heuballengewicht wird nur einmal als Gesamtgewicht und nur an einer einzigen Stelle gewogen.

Andere Wiegetechniken und Ballenpressen sind aus der US-A-4,162,603 bzw. der parallelen AT-361 775 B bekannt. Die Ballenpresse besitzt einen Einfüllschacht, an dem etwa im mittleren Bereich eine den Schacht absperrende, ein- und ausschiebbare Platte mit einer Waage angeordnet ist. Auf dieser Sperrplatte wird das eingeschneite Fasergut vor dem Verpressen gewogen. Nach dem Wiegen fällt das Fasergut weiter im Einfüllschacht nach unten bis in den starren Bodenbereich und wird anschließend von abwärts fahrenden Druckgabeln in einer ersten Vorpressstufe zusammengedrückt. Diese vorgepresste Ladung wird anschließend durch einen querbeweglichen Schieber in eine anschließende Vorpresskammer verfrachtet und dort mit einem hydraulisch betätigten Vorpressstempel weiter verdichtet. Bei dieser Anordnung sind mehrere zusätzliche Schieber im Einfüllschacht erforderlich, was einerseits den Bauaufwand der Ballenpresse steigert und andererseits die erforderliche Bauhöhe der Ballenpresse vergrößert. Die eingeschneiten Fasern werden außerdem nur einmal gewogen.

Die WO-A-86/07030 zeigt eine ähnliche Wiegetechnik an einer Ballenpresse. Die Ballenpresse besitzt einen Einfüllschacht, an dessen Unterseite ein Wiegecontainer in Form eines Sammelbehälters mit einer Waage und mit einer den Schacht absperrenden, ein- und ausschiebbaren Platte angeordnet ist. In diesem Wiegecontainer wird das eingeschneite Fasergut vor dem Verpressen gesammelt und komplett gewogen. Nach dem Wiegen fällt das Fasergut weiter im Einfüllschacht nach unten bis in den starren Bodenbereich und wird anschließend von einer abwärts fahrenden Druckplatte verpresst.

Die aus der GB-A-1 384 080 bekannte Ballenpresse besitzt eine vorgeschaltete Wiegeeinrichtung mit mehreren Wiegecontainern auf einem Karussell, die jeweils mit der für einen Pressballen benötigten Fasermenge gefüllt werden. Sobald das benötigte Gesamtgewicht erreicht ist, wird die Faserzufuhr abgeschaltet und der befüllte Wiegecontainer in eine Übergabeposition zur Ballenpresse gedreht. Das vordosierte Fasergut wird aus dem Wiegecontainer entnommen, der Ballenpresse zugeführt und in üblicher Weise ohne einen weiteren Wiegevorgang zum Ballen gepresst.

Aus der DE-G-2 045 864 ist eine Ballenpresse bekannt, bei der das zum Ballen verpresste Fasergut mittels einer den Boden des Füllkastens bildenden Schnürplatte gewogen wird, welche auf einer Wiegeplatte angeordnet und mit einem Hubstempel verbunden ist. Hierbei wird das Fasergut nur ein Mal und zusammen mit dem Presskasten und der Schnürplatte gewogen. Diese Wiegemethode ist relativ ungenau und fehleranfällig, weil stets erhebliche Zusatzgewichte von Presskasten oder dergleichen anderen Teilen mitgemessen und beim Wiegeergebnis dann wieder rechnerisch in Abzug gebracht werden müssen. Außerdem erlaubt diese Wiegemessung keine ausreichende Genauigkeit bei der Dosierung des Fasergutes und der Einstellung des Ballengewichtes.

Die US-A-5,890,426 zeigt eine andere Ballenpresse, bei der die einzelnen Chargengewichte in einem Trichter mit einer Wiegevorrichtung gewogen und mittels eines Rechners bis zum gewünschten Ballengesamtgewicht aufaddiert werden. Die letzte Charge wird dann entsprechend gesteuert, um das gewünschte Ballengewicht exakt zu erreichen. Eine Kontrolle des Wiegeergebnisses und eine zweite Wiegung finden hier aber ebenfalls nicht statt. Zudem wird der Trichter nebst seinem Verschluss stets mitgewogen.

Aus der FR-A 2 542 253 und der parallelen DE-C-33 08 027 ist eine Ballenpresse bekannt, bei der ebenfalls eine einzige Wiegevorrichtung vorhanden ist, wobei das gesamte eingefüllt Fasergut in einem sehr hoch angeordneten Wiegekasten gesammelt und mit dem Kasten gewogen wird. Erst nach Erreichen des gewünschten Gesamtgewichts wird das Fasermaterial in einen Füllkasten überschoben. Diese Vorgehensweise hat den zusätzlichen Zweck, beim Einfüllen des Faserguts in den Wiegekasten eine erste Vorverdichtung durch Schwerkraft zu erreichen und anschließend durch den schlagartigen Weitersturz des Materials in den Presskasten eine Zusatzverdichtung zu schaffen. Auch bei dieser Ballenpresse findet nur ein einziger Wiegevorgang statt.

Die GB-A-2 033 590 zeigt eine Ballenpresse mit einer vorgeschalteten Wiegeeinrichtung, die aus einem Wiegecontainer mit Wiegezellen besteht und über einen Rechner gesteuert wird. Hierbei werden wie bei der vorgenannte US-A-5,890,426 die Einzelchargen samt Behälter gewogen, die einzelnen Chargengewichte aufaddiert und die letzten Chargen entsprechend gesteuert.

Die US-A-3,220,500 offenbart eine Ballenpresse in der speziellen Ausgestaltung als Karussellpresse, wobei eine Wiegeeinrichtung vorhanden ist, die aus vier im Rechteck gleichmäßig verteilten Stempeln besteht, welche über zwei Paar Querträger beide Presskästen und das dort eingefüllte Fasergut wiegen. Der Wiegevorgang findet dabei nur einmal vor der Endverdichtung durch einen Tramper statt.

Die EP-A-0 224 205 und die parallele DE 36 86 133 T2 befassen sich mit einer gattungsfremden Technik, nämlich mit dem Pressen von Formkörpern aus Holzpartikeln nach Art einer Pressspanplatte, wobei die Partikelmenge mit einer Wiegevorrichtung dosiert wird. Die ebenfalls gattungsfremde DE-296 02 267 U1 zeigt eine Müllsammeleinrichtung mit einer einzelnen Wiegevorrichtung.

Es ist Aufgabe der vorliegenden Erfindung, eine bessere Wiegetechnik für eine Ballenpresse aufzuzeigen.

Die Erfindung löst diese Aufgabe mit den Merkmalen im Hauptanspruch. Die Erfindung erlaubt es, das Fasergut vor dem Pressen des Ballens im Einfüllschacht zu wiegen und im Weiteren auch die Faserzufuhr entsprechend genau zu steuern und zu dosieren. Das Fasergut wird bereits bei der Zufuhr in die Ballenpresse in kleinen Chargen gewogen, wobei hierüber auch die vorerwähnte Dosierung exakt gesteuert werden kann.

Eine erste Wiegevorrichtung ist am Boden des Einfüllschachtes angeordnet und bildet eine Chargenwaage. Sie erlaubt eine genaue Messung kleiner Teilmengen des Fasergutes vor dem Sammel- und Pressvorgang. Hierdurch ist auch eine Dosierung der in den einzelnen Chargen enthaltenen Fasermenge bzw. des Fasergewichtes möglich. Die Anordnung der Wiegevorrichtung am Boden des Einfüllschachtes hat zudem den Vorteil, dass die Wiegevorrichtung sehr platzsparend untergebracht werden kann und die Größe und insbesondere die Höhe der Ballenpresse nicht unnötig vergrößert. Die Wiegevorrichtung kommt mit wenigen Teilen und einem geringen Bauaufwand aus, wobei auch die Mehrfachfunktion des Schachtbodens als Schacht- und Waagenteil vorteilhaft ist. Außerdem werden durch die bodenseitige Chargenwaage die Totgewichte oder Fremdgewichte beim Wiegen klein gehalten. Es wird im wesentlichen nur die eingefüllte Fasergutcharge gewogen. Ein weiterer Vorteil besteht in der leichten und funktionalen Integrierbarkeit der Chargenwaage in die Ballenpresse. Sie lässt sich bei Bedarf auch nachrüsten.

Das Fasergut kann mehrmals gewogen werden, was vorzugsweise an unterschiedlichen Stellen und mit unterschiedlichen Wiegeeinrichtungen geschieht, wobei neben dem Chargengewicht auch das Sammelgewicht des eingefüllten und gesammelten Faserguts bestimmt werden kann. Durch Vergleich der addierten Chargengewichte mit dem separat gemessenen Sammelgewicht kann die Messgenauigkeit der Wiegung kontrolliert und gesichert werden. Auf der Basis des Sammelgewichtes lässt sich dann auch am Ende des Füll- und Sammelvorgangs die Menge oder das Gewicht von ein oder mehreren der letzten Chargen zum Einhalten eines exakt vorgegebenen Ballengewichtes genau dosieren. Waageninterne Messfehler und insbesondere auch externe Fehlereinflüsse werden dadurch minimiert.

Das chargenweise und in kleinen Mengen zugeführte Fasergut wird bereits vor der Übergabe in den Sammel- oder Pressschacht der Ballenpresse in dem vorgeschalteten Einfüllschacht gemessen. Hierdurch werden die auf das einzelne Chargengewicht wirkenden Fehlereinflüsse minimiert. Innerhalb des Sammel- oder Pressschachtes kann dann die Ermittlung des Sammelgewichtes in geeigneter Weise am Sammelschacht oder am Presskasten erfolgen. Die Wiegetechnik lässt sich dadurch an unterschiedliche Bauformen von Ballenpressen anpassen. Sie ist dabei besonders für Ballenpressen mit einem vertikalen Sammel- oder Pressschacht geeignet.

An der Ballenpresse kann mindestens eine weitere Wiegevorrichtung im Bereich des Sammelschachtes angeordnet sein, die als Sammelwaage ausgebildet ist. Sie misst das Gesamtgewicht des eingefüllten Fasergutes. Die Wiegevorrichtungen für die Chargen- und Sammelwaage können über eine gemeinsame Wiegesteuerung miteinander verbunden sein und sich ergänzen. Dies ist insbesondere mit Hinblick auf die Minimierung der Wiegefehler von Vorteil.

Für die Ausbildung der ersten Wiegevorrichtung bzw. der Chargenwaage ist es von Vorteil, wenn der Schachtboden elastisch und leichtgewichtig ist und sich über einem geeigneten Wiegeelement, z.B. einer Wiegeplatte mit Wiegezellen, befindet. Durch diese Anordnung wird der durch Fremd- oder Zusatzmassen verursachte Wiegefehler minimiert. Dies ist besonders wegen des niedrigen Gewichtes der Einzelchargen von Vorteil. Alternativ kann der Schachtboden auch lose auf dem Wiegeelement aufliegen und umlaufend abgedichtet sein.

Für die zweite Wiegevorrichtung bzw. die Sammelwaage gibt es verschiedene vorteilhafte Ausführungsformen, die sich durch unterschiedliche Messtechniken, Bauhöhen und Bauaufwand auszeichnen. Die Anordnung eines Zwischenspeichers mit Wiegevorrichtung erlaubt das Befüllen und Wiegen vor dem Presskasten. Der Presskasten kann dabei temporär abwesend sein. Sobald der Presskasten dann wieder bereitsteht, kann die vordosierte und gewogene Fasermasse bzw. Kastencharge komplett in den Presskasten überschoben werden. Dies erhöht die Verfügbarkeit des Presskastens und erlaubt innerhalb einer Ballenpressanlage mit weniger zirkulierenden Presskästen auszukommen. Die zweite Variante mit der Wiegevorrichtung am der unteren Pressplatte spart Bauhöhe und Bauaufwand. Sie ist insbesondere für kleinere Ballenpressanlagen konzipiert und preisgünstiger.

In einer dritten Variante ist es möglich, den fertig gepressten und ggf. auch bereits verpackten Pressballen zu wiegen und aus dem Wiegeergebnis einen Korrekturfaktor für die Chargenwaage zu gewinnen. In diesem Fall kann auf die vorerwähnte zweite Wiegevorrichtung oder Sammelwaage für das angesammelte aber noch nicht fertig gepresste Fasergut verzichtet werden. Diese dritte Variante ist besonders wirtschaftlich, weil aufgrund von Eichvorschriften eine Pressballenwaage in vielen Fällen ohnehin erforderlich ist.

In den Unteransprüchen sind weitere vorteilhafte Ausgestaltungen der Erfindung angegeben.

Die Erfindung ist in den Zeichnungen schematisch dargestellt. Im einzelnen zeigen
- Figur 1:: eine schematische aufgeschnittene Seitenansicht einer Ballenpresse mit einer Chargenwaage und einer Sammelwaage,
- Figur 2:: eine Variante zu Figur 1 mit einer anderen Sammelwaage und
- Figur 3:: eine Variante zu Figur 1 und 2 mit einer als Ballenwaage ausgebildeten Sammelwaage.

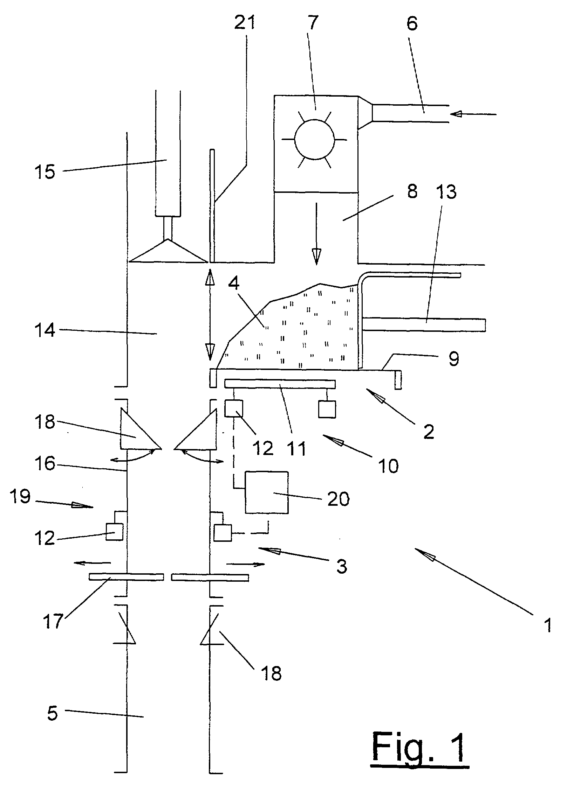

In Figur 1, 2 und 3 ist eine Ballenpresse (1) schematisch dargestellt. Sie ist vorzugsweise als Vorpressstation konzipiert, bei der das von einer vorgeschalteten Faseranlage (nicht dargestellt) zugeführte Fasergut (4) chargenweise in einen Presskasten (5) gefüllt und dort vorverdichtet wird. In einer nachgeschalteten Fertigpresse erfolgt dann die Fertigverdichtung. Der Presskasten (5) ist zu diesem Zweck transportabel. Alternativ kann die Ballenpresse (1) auch eine kombinierte Vor- und Fertigpresse sein. Die gezeigte Ballenpresse (1) kann Bestandteil einer Karussellpresse oder eines anderen Pressensystems, insbesondere eines Zentralpressensystems sein.

Bei dem Fasergut (4) handelt es sich vorzugsweise um Kunststofffasern. Dies können kurz geschnittene sogenannte Stapelfasern oder lange Faserstränge, sogenanntes Tow, sein. Alternativ kann es sich auch um Naturfasern handeln.

Die Ballenpresse (1) hat eine Faserzuführung (6) mit einem nachgeschalteten Kondenser (7), der auch als Dosiereinrichtung ausgebildet oder von einer Dosiereinrichtung ergänzt sein kann. Der Kondenser (7) ist über einem Einfüllschacht (8) angeordnet, der seitlich neben einem Sammelschacht (14) angeordnet ist. Der Einfüllschacht (8) ist seitlich verbreitert und steht mit dem Sammelschacht (14) in Verbindung. Im Einfüllschacht (8) wird das Fasergut (4) unter Bildung kleiner Chargen z.B. vertikal von oben eingefüllt und dann mittels eines geeigneten Förderers (13), z.B. eines seitlichen Transportschiebers in den angrenzenden Sammelschacht (14) im wesentlichen horizontal verschoben. Mit einem vertikalen Schieber (21) oder einem anderen Verschluss kann der Sammelschacht (14) gegenüber dem Einfüllschacht (8) abgeschlossen werden. Vorzugsweise ist der Kondenser (7) direkt über dem Einfüllschacht (8) angeordnet, wodurch die Bauhöhe klein gehalten wird.

Der Sammelschacht (14) ist vorzugsweise zugleich der Pressschacht, in dem ein Presszylinder (15) bzw. ein Vorpresszylinder auf- und abbeweglich ist. Der Einfüllschacht (8) und der Sammelschacht (14) sind vorzugsweise parallel zueinander angeordnet und haben im bevorzugten Ausführungsbeispiel eine im wesentlichen vertikale Ausrichtung mit einer horizontalen Verbindung für die Übergabe des Faserguts (4).

Unterhalb des Sammelschachtes (14) befindet sich eine Aufnahme für einen transportablen Presskasten (5). In den Presskasten (5) wird das Fasergut (4) mittels des Presszylinders (15) überschoben und vorverdichtet und ggf. auch fertig verdichtet. Der Presskasten (5) kann seitliche schwenkbare oder anderweitig bewegliche Rückhalter (18) haben, die das verpresste Fasergut am Aufsteigen und Herausquellen aus dem Presskasten (5) hindern.

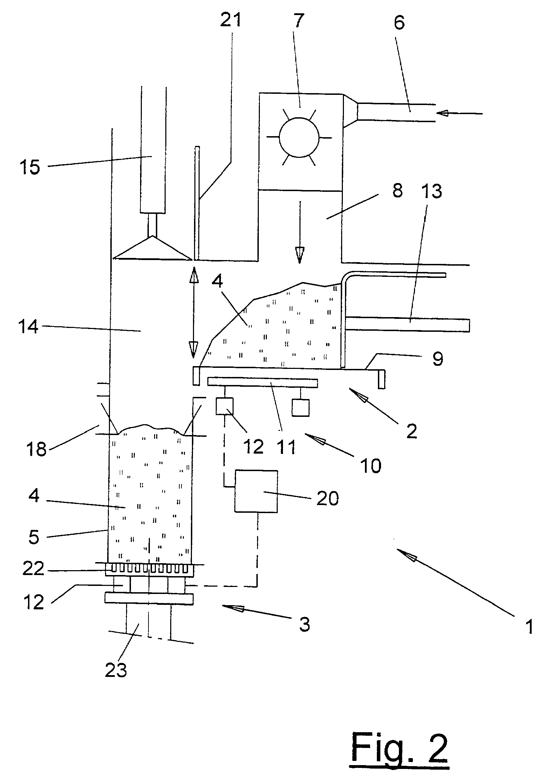

Der Presskasten (5) ist an der Unterseite durch eine untere Pressplatte (22) der Ballenpresse (1) verschlossen. Die Pressplatte (22) stützt die Presskraft des Presszylinders (15) nach unten ab. Sie ist vorzugsweise mit einer Mehrzahl durchgängiger Nuten an der Plattenoberfläche ausgerüstet, durch die Umreifungen oder andere Haltemittel zur Fixierung des fertig gepressten Ballens (24) geleitet und um den Pressballen (24) herumgelegt werden können. Figur 2 zeigt diese Anordnung in einer schematischen Ansicht.

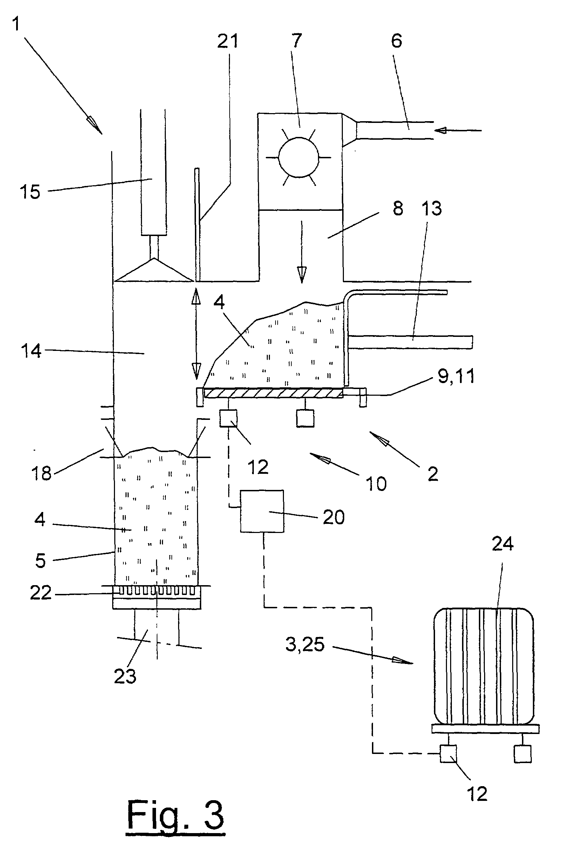

Das Gewicht des Faserguts (4) wird mindestens einmal, vorzugsweise zweimal gewogen. Der erste Wiegevorgang findet vor dem Verpressen und ggf. auch vor dem Sammeln des Faserguts (4) statt und erfasst die einzelnen kleinen Fasergutchargen bei der Zufuhr und beim Einfüllen in der Ballenpresse (1). Durch Addition der Messergebnisse kann das Sammelgewicht der eingefüllten und gesammelten Fasergutchargen bestimmt werden. Zusätzlich kann ein zweiter Wiegevorgang stattfinden, der ebenfalls vor dem Verpressen des Faserguts (4) im Presskasten (5) erfolgen kann, alternativ aber auch am fertigen Pressballen (24) vorgenommen werden kann. Bei diesem zweiten Wiegevorgang wird das Sammelgewicht der eingefüllten Fasern separat bestimmt, wobei in der einen Variante gemäß Figur 1 das Satamelgewicht an einem Zwischenspeicher (16) im Bereich des Sammelschachtes (14) oder in der Variante von Figur 2 am Presskasten (5) und im Bereich der unteren Pressplatte (22) geschehen kann. Figur 3 zeigt die dritte Variante mit einer Ballenwaage (25).

Die Ballenpresse (1) hat mindestens eine Wiegevorrichtung (2), die als Chargenwaage ausgebildet ist. Vorzugsweise ist zusätzlich eine zweite Wiegevorrichtung (3) vorhanden, die als Sammelwaage ausgebildet ist. Figur 1 und 2 zeigen für die Sammelwaage (3) zwei unterschiedliche Ausführungsformen.

Die Wiegevorrichtung (2) bzw. Chargenwaage ist vorzugsweise am quer zur Einfüllrichtung liegende Boden des Einfüllschachtes (8) angeordnet und misst das Gewicht der einzelnen eingefüllten Fasergutchargen vor dem Überschieben in den Sammelschacht (14).

Die Wiegevorrichtung (2) von Figur 1 und 2 weist hierfür einen elastischen und leichtgewichtigen Schachtboden (9) auf, der unter dem Gewicht der Fasergutcharge nach unten nachgeben kann. Der Schachtboden (9) kann von einer Stoffbahn oder einem dünnen Förderband oder dergleichen anderen geeigneten Material gebildet werden. Der Schachtboden (9) ist vorzugsweise stationär angeordnet, kann aber auch aus einem umlaufend geführten und intermittierend angetriebenen Förderband bestehen. Der Schieber (13) schiebt nach dem Wiegevorgang die Fasergutcharge vom Schachtboden (9) ab.

Unterhalb des nachgiebigen Schachtbodens (9) befindet sich ein geeignetes Wiegeelement (10). Im gezeigten Ausführungsbeispiel besteht es aus einer Wiegeplatte (11) mit ein oder mehreren darunter angeordneten Wiegezellen (12). Dies können geeignete Druckmessdosen oder dergleichen sein, die das Gewicht der Wiegeplatte (11), des aufliegenden elastischen Schachtbodens (9) und der Fasergutcharge messen.

Figur 3 zeigt eine weitere Variante der Chargenwaage (2). Hier bildet der Schachtboden (9) zugleich die Wiegeplatte und ist lose auf die Wiegezellen (12) oder andere geeignete Wiegeelemente aufgelegt. Der lose Schachtboden (9) kann außenseitig von einer geeigneten Dichtung umgeben sein, z.B. einer dünnen Folien- oder Stoffbahn.

Alternativ kann das Wiegelement (10) auch in beliebig anderer geeigneter Weise ausgebildet und z.B. in einen starren Schachtboden mit entsprechenden Dichtungen integriert sein.

Die zweite Wiegevorrichtung (3) oder Sammelwaage ist im Ausführungsbeispiel von Figur 1 dem Sammelschacht (14) zugeordnet und besitzt ein direkt im Sammelschacht (14) fluchtend einfügbares Wiegeelement (19). Dieses besteht z.B. aus einem kastenförmigen Zwischenspeicher (16), der im Bodenbereich einen steuerbaren Verschluss (17) aufweist und ein oder mehreren mit dem Zwischenspeicher (16) verbundenen Wiegezellen (12). Der Zwischenspeicher (16) kann ebenfalls ein oder mehrere bewegliche Rückhalter (18) aufweisen. Der Verschluss (17) besteht beispielsweise aus zwei von der Seite her einfahrbaren Schieberplatten.

Im Zwischenspeicher (16) werden bei geschlossenem Boden die einzelnen Fasergutchargen gesammelt und als Ganzes gewogen.

In der Variante von Figur 2 kann der Zwischenspeicher (16) entfallen. Statt dessen ist die zweite Wiegevorrichtung (3) bzw. Sammelwaage dem Presskasten (5) zugeordnet. Durch den Wegfall des Zwischenspeichers (16) kann die Ballenpresse (1) in der Höhe verkürzt und im Bauaufwand vereinfacht werden.

In der zweiten Variante besteht die Sammelwaage (3) aus einer Hubeinrichtung (23), die mit der unteren Pressplatte (2) des Presskastens (5) über ein oder mehrere Wiegezellen (12) verbunden ist. Die Hubeinrichtung (23) kann zum Wiegen den mit Fasergut (4) befüllten Presskasten (5) und die untere Pressplatte (22) anheben und dabei deren Gesamtgewicht messen. Nach Abzug der bekannten Eigengewichte der Pressplatte (22) und des Presskastens (5) ergibt der Messwert das Fasergewicht.

In der dritten Variante von Figur 3 besteht die Sammelwaage (3) aus einer Ballenwaage (25), mit der der fertig gepresste Pressballen (24) gewogen wird. Der Pressballen (24) ist dabei vorzugsweise auch bereits fertig verpackt und mit einer Umreifung versehen. Die Ballenwaage (25) kann einer separaten oder integrierten Fertigpresse nachgeschaltet sein. Die Ballenwaage (25) kann hierbei in beliebig geeigneter Weise ausgebildet sein und aus einer Wiegeplatte mit mehreren Wiegezellen (12) bestehen.

Die beiden Wiegevorrichtungen (2,3) sind durch eine gemeinsame Wiegesteuerung (20) verbunden, die die einzelnen Messergebnisse empfängt, auswertet und ggf. speichert. Durch die Wiegesteuerung (20) können verschiedene Wiegeverfahren durchgeführt werden. Die Wiegesteuerung (20) ist außerdem mit dem Kondenser (7) bzw. der Einfüll- oder Dosiervorrichtung verbunden und steuert diese.

Die erste Wiegevorrichtung (2) bzw. Chargenwaage wiegt jede einzelne Fasergutcharge. Der Messfehler ist aufgrund der geringen Zusatzmassen des Schachtbodens (9) und des Eigengewichtes des Wiegeelementes (10) gering. Aus der Summe der Chargengewichte kann das Gesamtgewicht oder Sammelgewicht des eingefüllten Faserguts (4) berechnet werden. Durch die Steuerung des Kondensers (7) bzw. der Einfüll- oder Dosiervorrichtung von der Wiegevorrichtung (2) oder der gemeinsamen Wiegesteuerung (20) lässt sich bei den letzten Chargen das Füllgewicht zum Erhalt des genauen gewünschten Pressballengewichts exakt dosieren und einstellen.

Durch die zweite Wiegevorrichtung (3), insbesondere eine Sammelwaage gemäß Figur 1 und 2, ist eine noch genauere Messung möglich. Der Messfehler der ersten Wiegevorrichtung bzw. Chargenwaage (2) ist zwar sehr gering, er addiert sich aber mit der Zahl der Chargen.

Für eine genauere Messung wird daher vorzugsweise gegen Ende des Einfüllvorganges vor den letzten zwei oder drei Chargen das Sammelgewicht des bisher eingefüllten Fasergutes (4) in der Wiegevorrichtung (3) bzw. der Sammelwaage gewogen. Dieses Gewicht des gesammelten Fasergutes ist so hoch, dass der Messfehler durch die Zusatzmassen der Wiegevorrichtung (3) gering ist. Dieses Messergebnis der Sammelwaage ist jedoch genauer als die Summe der von der ersten Wiegevorrichtung (1) bzw. Chargenwaage ermittelte Summe der Einzelchargen.

Nach Ermittlung dieses vorläufigen Sammelgewichtes werden dann die folgenden zwei oder drei Einzelchargen mit der ersten Wiegevorrichtung (2) bzw. Chargenwaage gewogen und zu dem vorläufigen Sammelgewicht des bisher eingefüllten Fasergutes (4) addiert. Bei dieser Wiegetechnik ergibt sich eine maximale Wiegegenauigkeit. Die letzte Einzelcharge wird dann über die Wiegesteuerung (20) und den Kondenser (7) unter Rückmeldung der Wiegevorrichtung (2) genau auf das benötigte Restgewicht dosiert. Alternativ kann die Dosierung auch bei mehreren der letzten Einzelchargen erfolgen.

Diese Auswerte- und Steuerungsvorgänge finden in der gemeinsamen Wiegesteuerung (20) statt. In dieser kann durch Vergleich der beiden Wiegevorrichtungen (2,3) und ihrer Messergebnisse auch eine Überwachung der Wiegegenauigkeit und ein eventueller Fehlerabgleich durchgeführt werden. Die Prozesssicherheit und die Reproduzierbarkeit werden dadurch gewährleistet.

In der Ausführungsform von Figur 3 ist die Ballenwaage (25) ebenfalls vorzugsweise an die gemeinsame Wiegesteuerung (20) angeschlossen. Mit der Ballenwaage (25) wird das faktische Endgewicht des Pressballens (24) bestimmt. Aus dieser Ballenwiegung kann durch Vergleich von Ist- und Sollgewicht des Pressballens (24) ein Korrekturfaktor gewonnen werden, der über die Wiegesteuerung (20) berechnet wird und der zur Steuerung der Chargenwaage (2) herangezogen werden kann. Hierbei wirkt sich das Messergebnis der Ballenwaage (25) und der Korrekturfaktor allerdings erst auf die nächstfolgenden Ballenpressvorgänge aus. Bei dieser Technik werden die Messergebnisse der Chargenwaage (2) für die einzelnen Ballenpressvorgänge und insbesondere der Summenwert der Chargengewicht zumindest zeitweise zwischengespeichert, um den Korrekturfaktor anhand eines Vergleichs der summierten Chargengewichte und des tatsächlichen Pressballengewichtes zu ermitteln. Bei der Ballenwaage (25) wird dabei auch das Nettogewicht des Pressballens (24) ohne Verpackung und Umreifung gemessen.

Bei diesem Wiegeverfahren mit einer Ballenwaage (25) wird die Chargenwiegung und die Steuerung der Faserzufuhr iterativ optimiert. Wenn das Pressballengewicht zu hoch ist, wird die Faserzufuhr und die Summe der gemessenen und gesteuerten Chargengewichte entsprechend verringert. Bei einem Untergewicht des Pressballens (24) erfolgt umgekehrt eine Erhöhung der Faserzufuhr und der Chargengewichte. Sobald der Istwert des Pressballengewichtes dem Sollwert entspricht oder sich in einem festzulegenden Toleranzbereich befindet, ist die Chargenwiegung und die Steuerung der Faserzufuhr optimal eingestellt. Nachdem die Pressballenherstellung und die Chargenwiegung bzw. die Steuerung der Faserzufuhr relativ wenig toleranzbehaftet sind, stelle sich nach dem beschriebenen Optimierungsvorgang ein stabiler Wiege- und Ballenpressorozess ein.

Abwandlungen der gezeigten Ausführungsform sind in verschiedener Weise möglich. Zum einen kann die Ausbildung der Wiegevorrichtungen (2,3) und ihrer Wiegeelemente (10,19) in beliebig geeigneter Weise variieren. Hierzu kann insbesondere auch der Schachtboden (9) in anderer Weise ausgebildet sein. Das Wiegen der Einzelchargen kann statt am Einfüllschacht (8) auch an einer anderen geeigneten Stelle der Ballenpresse (1) stattfinden. Die zweite Wiegevorrichtung (3) kann ebenfalls an anderer Stelle angeordnet sein, z.B. am Presskasten (5). Sie ist auch in diesem Fall seitlich neben und unterhalb des Einfüllschachtes (8) angeordnet. In einer besonders vereinfachten Ausführungsform kann auch nur eine Wiegevorrichtung als Sammelwaage (3) im Bereich des Sammelschachts (14) angeordnet sein. Ferner können auch die Ausbildung, Anordnung und Geometrie der anderen Komponenten der Ballenpresse (1) in beliebig geeigneter Weise variieren. Statt einer Vertikalanordnung mit einem senkrechten Presszylinder (15) ist auch eine Schräg- oder Horizontalanordnung in Verbindung mit einer entsprechenden Umgestaltung der einzelnen Schächte und der sonstigen Pressenkomponenten möglich. Der Sammel- und Pressschacht können zudem getrennt sein. Variabel ist im weiteren auch der Einfüllbereich mit Faserzuführung (6) und Kondenser (7). Ansonsten kann die Ballenpresse (1) in beliebig geeigneter Weise als Einzelpresse, Karussellpresse oder dergleichen ausgebildet sein.

### BEZUGSZEICHENLISTE

- 1: Ballenpresse, Vorpresse
- 2: Wiegevorrichtung, Chargenwaage
- 3: Wiegevorrichtung, Sammelwaage
- 4: Fasergut
- 5: Presskasten
- 6: Faserzuführung
- 7: Konderser
- 8: Einfüllschacht
- 9: Schachtboden, Band
- 10: Wiegeelement, Chargenwaage
- 11: Wiegeplatte
- 12: Wiegezelle
- 13: Förderer, Schieber
- 14: Sammelschacht, Pressschacht
- 15: Presszylinder, Vorpresszylinder
- 16: Zwischenspeicher, Wiegekasten
- 17: Verschluss
- 18: Rückhalter
- 19: Wiegeelement, Sammelwaage
- 20: Wiegesteuerung
- 21: Schieber
- 22: untere Pressplatte
- 23: Hubeinrichtung
- 24: Pressballen
- 25: Ballenwaage

## Patentansprüche

1. Verfahren zum Wiegen und Verpressen von Fasergut (4) zu Pressballen (24) mit einer Ballenpresse (1) und mindestens einer Wiegevorrichtung (2,3), wobei das Fasergut (4) in der Ballenpresse (1) vor dem Verpressen im Bereich eines Einfüllschachts (8) gewogen wird, **dadurch gekennzeichnet, dass** das Fasergut (4) in mehreren kleinen Chargen zugeführt und chargenweise beim Einfüllen innerhalb des Einfüllschachts (8) am S-chachtboden (9) gewogen wird, wobei das Sammelgewicht des eingefüllten und gesammelten Faserguts (4) durch Addition der Chargengewichte und/oder durch zusätzliches direktes Wiegen des gesammelten Faserguts (4) bestimmt wird und wobei die Zufuhr des Faserguts (4) in Abhängigkeit vom Sammel- und Chargengewicht gesteuert wird.

2. Verfahren nach Anspruch 1, **dadurch gekennzeichnet, dass** das Fasergut (4) mehrmals an verschiedenen Stellen mit unterschiedlichen Wiegevorrichtungen (2,3) gewogen wird.

3. Verfahren nach Anspruch 1 oder 2, **dadurch gekennzeichnet, dass** das Sammelgewicht des eingefüllten und gesammelten Faserguts (4) vor dem Verpressen des Faserguts (4) gewogen wird.

4. Verfahren nach Anspruch 1 oder 2, **dadurch gekennzeichnet, dass** das Sammelgewicht des eingefüllten und gesammelten Faserguts (4) durch nachträgliches Wiegen des Pressballens (24) bestimmt wird, wobei aus dem Wiegeergebnis ein Korrekturfaktor für die Chargenwiegung bestimmt wird.

5. Verfahren nach einem der Ansprüche 1 bis 3, **dadurch gekennzeichnet, dass** zur exakten Dosierung der Faserzufuhr gegen Ende des Sammelvorgangs das Sammelgewicht durch direktes Wiegen des gesammelten Faserguts (4) bestimmt wird und danach die restlichen Chargen unter Ermittlung und Addition der einzelnen Chargengewichte gewogen und dosiert werden.

6. Ballenpresse für Fasergut (4) mit mindestens einer Wiegevorrichtung (2,3), einem Sammel- oder Pressschacht (14) und einem Einfüllschacht (8) zur chargenweisen Aufnahme von Fasergut (4), wobei am Boden (9) des Einfüllschachts (8) eine Wiegevorrichtung (2) angeordnet ist, **dadurch gekennzeichnet dass** die Ballenpresse (1) mehrere Wiegevorrichtungen (2,3) zum Wiegen der Chargengewichte und des Sammelgewichts des Faserguts (4) und eine Wiegesteuerung (20) zur Steuerung der Zufuhr des Faserguts (4) in Abhängigkeit vom Sammel- und Chargengewicht aufweist.

7. Ballenpresse nach Anspruch 6, **dadurch gekennzeichnet, dass** unter dem Schachtboden (9) ein Wiegeelement (10) angeordnet ist.

8. Ballenpresse nach Anspruch 6 oder 7, **dadurch gekennzeichnet, dass** das Wiegeelement (10) eine Wiegeplatte (11) mit ein oder mehreren Wiegezellen (12) aufweist.

9. Ballenpresse nach Anspruch 6, 7 oder 8, **dadurch gekennzeichnet, dass** der Schachtboden (9) als Wiegeplatte (11) ausgebildet ist und mit einer Abdichtung lose auf den Wiegezellen (12) aufliegt.

10. Ballenpresse nach einem der Ansprüche 6 bis 9, **dadurch gekennzeichnet, dass** die Ballenpresse (1) mindestens eine weitere dem Sammelschacht (14) oder einem Presskasten (5) zugeordnete Wiegevorrichtung (3) aufweist.

11. Ballenpresse nach Anspruch 10, **dadurch gekennzeichnet, dass** die weitere Wiegevorrichtung (3) ein im Sammelschacht (14) einfügbares Wiegeelement (19) aufweist.

12. Ballenpresse nach Anspruch 10 oder 11, **dadurch gekennzeichnet, dass** das Wiegeelement (19) einen kastenförmigen, bodenseitig verschließbaren (17) Zwischenspeicher (16) mit ein oder mehreren Wiegezellen (12) aufweist.

13. Ballenpresse nach nach Anspruch 10, **dadurch gekennzeichnet, dass** die weitere Wiegevorrichtung (3) eine an der unteren Pressplatte (22) der Ballenpresse (1) angreifende Hubeinrichtung (23) mit ein oder mehreren Wiegezellen (12) aufweist.

14. Ballenpresse nach einem der Ansprüche 6 bis 9, **dadurch gekennzeichnet, dass** die Ballenpresse (1) mindestens eine weitere Wiegevorrichtung (3) aufweist, die als Ballenwaage (25) für den fertig gepressten Pressballen (24) ausgebildet ist.

15. Ballenpresse nach einem der Ansprüche 6 bis 14, **dadurch gekennzeichnet, dass** die Wiegevorrichtungen (2,3) mit einer gemeinsamen Wiegesteuerung (20) verbunden sind.

## Claims

1. Method for weighing and compressing fibrous material (4) into pressed bales (24) with a baling press (1) and at least one weighing apparatus (2, 3), the fibrous material (4) being weighed in the baling press (1) before being compressed in the region of a filling chute (8), **characterized in that** the fibrous material (4) is supplied in a plurality of small batches and is weighed batch by batch in the filling chute (8) at the bottom (9) of the chute as it is put in, the collected weight of the fibrous material (4) put in and collected being determined by adding the batch weights and/or by means of additional direct weighing of the collected fibrous material (4), and the supply of the fibrous material (4) being controlled as a function of the collected and batch weight.

2. Method according to Claim 1, **characterized in that** the fibrous material (4) is weighed repeatedly at various points with different weighing apparatuses (2, 3).

3. Method according to Claim 1 or 2, **characterized in that** the collected weight of the fibrous material (4) put in and collected is weighed before the compression of the fibrous material (4).

4. Method according to Claim 1 or 2, **characterized in that** the collected weight of the fibrous material (4) put in and collected is determined by means of subsequent weighing of the pressed bale (24), a correction factor for the batch weighing being determined from the weighing result.

5. Method according to one of Claims 1 to 3, **characterized in that**, for the purpose of exact metering of the supply of fibre towards the end of the collecting operation, the collected weight is determined by means of direct weighing of the collected fibrous material (4) and, after that, the remaining batches are weighed and metered while determining and adding the individual batch weights.

6. Baling press for fibrous material (4), having at least one weighing apparatus (2, 3), a collecting or pressing chute (14) and a filling chute (8) to hold fibrous material (4) batch by batch, a weighing apparatus (2) being arranged at the bottom (9) of the filling chute (8), **characterized in that** the baling press (1) has a plurality of weighing apparatuses (2, 3) for weighing the batch weights and the collected weight of the fibrous material (4), and a weighing controller (20) for controlling the supply of the fibrous material (4) as a function of the collected and batch weight.

7. Baling press according to Claim 6, **characterized in that** a weighing element (10) is arranged underneath the bottom (9) of the chute.

8. Baling press according to Claim 6 or 7, **characterized in that** the weighing element (10) has a weighing plate (11) with one or more weighing cells (12).

9. Baling press according to Claim 6, 7 or 8, **characterized in that** the bottom (9) of the chute is constructed as a weighing plate (11) and, with a seal, rests loosely on the weighing cells (12).

10. Baling press according to one of Claims 6 to 9, **characterized in that** the baling press (1) has at least one further weighing apparatus (3) assigned to the collecting chute (14) or a pressing case (15).

11. Baling press according to Claim 10, **characterized in that** the further weighing apparatus (3) has a weighing element (19) that can be inserted into the collecting chute (14).

12. Baling press according to Claim 10 or 11, **characterized in that** the weighing element (19) has an intermediate store (16) which is case-shaped, can be closed at the bottom (17) and has one or more weighing cells (12).

13. Baling press according to Claim 10, **characterized in that** the further weighing apparatus (3) has a lifting device (23) acting on the lower press plate (22) of the baling press (1) and having one or more weighing cells (12).

14. Baling press according to one of Claims 6 to 9, **characterized in that** the baling press (1) has at least one further weighing apparatus (3) which is constructed as a bale weigher (25) for the finally pressed pressed bale (24).

15. Baling press according to one of Claims 6 to 14, **characterized in that** the weighing apparatuses (2, 3) are connected to a common weighing controller (20).

## Revendications

1. Procédé pour peser et comprimer un produit fibreux (4) en balles pressées (24) comprenant une presse à balles (1) et au moins un dispositif de pesée (2, 3), dans lequel le produit fibreux (4) est pesé dans la presse à balles (1) avant d'être comprimé dans la région d'un puits de versement (8), **caractérisé en ce que** le produit fibreux (4) est acheminé en plusieurs petites charges et est pesé par charges lors du versement à l'intérieur du puits de versement (8) au fond du puits (9), le poids rassemblé du produit fibreux (4) versé et rassemblé étant déterminé par addition des poids des charges et/ou par pesée supplémentaire directe du produit fibreux (4) rassemblé, et l'alimentation en produit fibreux (4) étant commandée en fonction du poids rassemblé et du poids des charges.

2. Procédé selon la revendication 1, **caractérisé en ce que** le produit fibreux (4) est pesé plusieurs fois en différents endroits avec différents dispositifs de pesée (2, 3).

3. Procédé selon la revendication 1 ou 2, **caractérisé en ce que** le poids rassemblé du produit fibreux (4) versé et rassemblé est pesé avant la compression du produit fibreux (4).

4. Procédé selon la revendication 1 ou 2, **caractérisé en ce que** le poids rassemblé du produit fibreux (4) versé et rassemblé est déterminé par pesée subséquente de la balle pressée (24), le résultat de la pesée permettant de déterminer un facteur de correction pour la pesée par charges.

5. Procédé selon l'une quelconque des revendications 1 à 3, **caractérisé en ce que** pour le dosage exact de l'alimentation en fibres vers la fin de l'opération de rassemblement, le poids rassemblé est déterminé par pesée directe du produit fibreux rassemblé (4) et ensuite les charges restantes sont pesées et dosées en déterminant et en additionnant les poids individuels des charges.

6. Presse à balles pour produit fibreux (4) comprenant au moins un dispositif de pesée (2, 3), un puits de rassemblement ou de pressage (14) et un puits de versement (8), pour recevoir par charges du produit fibreux (4), au fond (9) du puits de versement (8) étant disposé un dispositif de pesée (2), **caractérisée en ce que** la presse à balles (1) présente plusieurs dispositifs de pesée (2, 3) pour la pesée des poids des charges et du poids rassemblé du produit fibreux (4) et une commande de pesée (20) pour la commande de l'alimentation en produit fibreux (4) en fonction du poids rassemblé et du poids des charges.

7. Presse à balles selon la revendication 6, **caractérisée en ce que** l'on dispose un élément de pesée (10) sous le fond du puits (9).

8. Presse à balles selon la revendication 6 ou 7, **caractérisée en ce que** l'élément de pesée (10) présente une plaque de pesée (11) avec une ou plusieurs cellules de pesée (12).

9. Presse à balles selon la revendication 6, 7 ou 8, **caractérisée en ce que** le fond du puits (9) est réalisé sous forme de plaque de pesée (11) et repose avec un joint d'étanchéité lâchement sur les cellules de pesée (12).

10. Presse à balles selon l'une quelconque des revendications 6 à 9, **caractérisée en ce que** la presse à balles (1) présente au moins un dispositif de pesée supplémentaire (3) associé au puits de rassemblement (14) ou à une caisse de presse (5).

11. Presse à balles selon la revendication 10, **caractérisée en ce que** le dispositif de pesée supplémentaire (3) présente un élément de pesée (19) pouvant être introduit dans le puits de rassemblement (14).

12. Presse à balles selon la revendication 10 ou 11, **caractérisée en ce que** l'élément de pesée (19) présente un accumulateur intermédiaire (16) en forme de caisse, pouvant être fermé (17) du côté du fond, avec une ou plusieurs cellules de pesée (12).

13. Presse à balles selon la revendication 10, **caractérisée en ce que** le dispositif de pesée supplémentaire (3) présente un dispositif de levage (23) avec une ou plusieurs cellules de pesée (12), venant en prise sur la plaque de presse inférieure (22) de la presse à balles (1).

14. Presse à balles selon l'une quelconque des revendications 6 à 9, **caractérisée en ce que** la presse à balles (1) présente au moins un dispositif de pesée supplémentaire (3) qui est réalisé sous forme de balance pour balles (25) pour les balles pressées (24) finies.

15. Presse à balles selon l'une quelconque des revendications 6 à 14, **caractérisée en ce que** les dispositifs de pesée (2, 3) sont connectés à une commande de pesée commune (20).
